# EUROPÄISCHE PATENTSCHRIFT

(11) **EP 2 109 259 B1**
(45) Veröffentlichungstag und Bekanntmachung des Hinweises auf die Patenterteilung: **08.06.2016**
(21) Anmeldenummer: 09005300.0
(22) Anmeldetag: 14.04.2009
(51) Int. Cl.: H04L 12/46, H04J 3/06, G05B 19/042, H04L 12/24, H04L 12/417, H04L 12/40

(54) **Verfahren, Buskomponenten und Steuerungssystem zur Ethernet-basierten Steuerung eines Automatisierungssystems**
Method, bus components and a control system for ethernet-based controlling an automation system
Procédé, composant de bus et système de commande destinés à la commande à base d'Ethernet d'un système d'automatisation

(30) Priorität: 11.04.2008 DE 102008018633
(43) Veröffentlichungstag der Anmeldung: 14.10.2009
(73) Patentinhaber: Phoenix Contact GmbH & Co. KG, 32825 Blomberg (DE)
(72) Erfinder: Kuschke, Detlev, 32816 Schieder-Schwalenberg (DE); Hoffmann, Michael, 33813 Oerlinghausen (DE)
(74) Vertreter: Herden, Andreas F.

(56) Entgegenhaltungen:
- EP-A2- 1 530 104
- EP-A2- 1 648 104
- EP-B1- 1 590 927
- US-A1- 2006 041 630
- US-A1- 2006 276 912

## Beschreibung

Die Erfindung betrifft allgemein die Automatisierungstechnik und insbesondere ein Verfahren, einen Buskoppler, einen Busteilnehmer und ein Steuerungssystem zur Echtzeit-Steuerung eines Automatisierungssystems.

In der Automatisierungstechnik kommen zunehmend Ethernet-basierte Feldbus-Systeme zum Einsatz. Basierend auf dem Ethernet-Protokoll benutzen diese Systeme einen Ethernet-Datenrahmen, um ein angeschlossenes Gerät anzusprechen. Ein Ethernet-Datenrahmen weist jedoch einen nicht unerheblichen Overhead an Daten auf, so dass beispielsweise ein einfaches digitales Feldgerät mit zum Beispiel nur 8 digitalen Ausgängen einen Datenrahmen empfangen muss, welcher mindestens 72 Bytes umfasst. Wenn viele Feldgeräte in einem Ethernet-basierten System eingesetzt werden, die nur sehr wenige Nutzdaten benötigen, so ist das Ethernet-Protokoll sehr ineffizient und macht das System langsam.

Ein weiterer Nachteil eines Ethernet-basierten Feldbus-Systems besteht in der Notwendigkeit, dass jeder Teilnehmer physikalisch mit einem Ethernet-Interface ausgerüstet werden muss, obwohl oft nur kleine Strecken überbrückt werden müssen. Dies führt zu unnötig hohen Kosten. Ein weiterer Nachteil der Ethernet-Schnittstelle besteht darin, dass für die Umsetzung in digitale Signale eine nicht unerhebliche Verzögerung auftritt, welche bei vielen Teilnehmern in einem System berücksichtigt werden muss. Dadurch lassen sich Ethernet-basierte Feldbus-Systeme nur begrenzt für Echtzeitanwendungen im Bereich der Automatisierungstechnik einsetzen.

Aus EP 1 590 927 B1 ist bekannt, zur Ausführung von Steuerungsaufgaben in Echtzeit die für die Echtzeitanwendung vorgesehenen Teilnehmer an einen ringförmigen Übertragungsweg anzuschliessen, wobei dieser ringförmige Übertragungsweg über einen Netzwerk-Koppler mit einem Netzwerk, auf dem Ethernet-Telegramme übertragen werden können, verbunden ist. Der Netzwerk-Koppler ist dabei so ausgelegt, dass ein über eine externe Schnittstelle des Netzwerk-Kopplers vom Netzwerk empfangenes Ethernet-Telegramm an eine interne Schnittstelle des Netzwerk-Kopplers weitergeleitet und auf dem ringförmigen Übertragungsweg ausgegeben wird, wobei jeder an den ringförmigen Übertragungsweg angeschlossene Teilnehmer beim Durchlauf des Ethernet-Telegramms auf dem ringförmigen Übertragungsweg die für den jeweiligen Teilnehmer bestimmten Nutzdaten mit dem auf dem ringförmigen Übertragungsweg umlaufenden Ethernet-Telegramm austauscht. Echtzeitanforderungen können dadurch eingehalten werden, dass sich die Reaktionszeit der einzelnen Teilnehmer durch die Verarbeitung der Ethernet-Telegramme auf dem ringförmigen Übertragungsweg im Durchlauf durch die daran angeschlossenen Teilnehmer verringert.

Nachteilig an dem in EP 1 590 927 B1 beschriebenen Verfahren ist jedoch, dass das auf dem ringförmigen Übertragungsweg umlaufende Ethernet-Telegramm mindestens 72 Bytes umfasst und somit den oben beschriebenen Overhead an Daten aufweist. Ferner führt der Einsatz des ringförmigen Übertragungsweges zu Jitter, durch den die Einhaltung von Echtzeitanforderungen begrenzt wird.

Das Dokument US 2006/041630 A1 beschreibt den Einsatz eines Gateways, welches dazu ausgebildet ist, Ethernet-Telegramme zu empfangen, zu konvertieren und an Geräte zu senden, welche an einen seriellen Bus angeschlossen sind, wobei die serielle Schnittstelle des Gateways so eingestellt werden kann, dass RS-232 oder RS-422/485 zu unterstützen.

Das Dokument EP 1 530 104 A2 beschreibt einen Buskoppler, welcher zur Umsetzung eines auf einem Steuerungsnetzwerk verwendeten Ethernet-Protokolls und eines anderen, auf einem Feldbus verwendeten Kommunikationsprotokoll ausgebildet ist.

Ferner beschreibt US 2006/276912 A1 ein Steuerungssystem, wobei das Steuerungssystem synchron eine Vielzahl von Aktoren steuert und wobei eine Laufzeitverzögerung zwischen der Steuerungseinheit und jedem Aktor bestimmt wird.

Der Erfindung liegt daher die Aufgabe zugrunde, einen Weg aufzuzeigen, wie die Steuerung von Automatisierungssystemen, insbesondere in Echtzeit, unter Einbeziehung eines Ethernet-basierten Netzwerkes verbessert werden kann, so dass die oben beschriebenen Nachteile vermieden werden können.

Eine weitere Aufgabe der Erfindung ist es, einen Weg aufzuzeigen, wie auf möglichst effiziente Weise ein echtzeitfähiges Ethernet-basiertes Steuerungssystem mit einer Vielzahl Teilnehmern bei gleichzeitig geringen Kosten pro Teilnehmer bereitgestellt und betrieben werden kann. Noch eine weitere Aufgabe der Erfindung ist es, ein echtzeitfähiges Ethernet-basiertes Steuerungssystem bereitzustellen, welches eine hohe Datenübertragungsgeschwindigkeit aufweist und/oder strengen Echtzeitanforderungen genügt, sowie ein Verfahren zu dessen Betrieb anzugeben.

Diese Aufgaben werden durch ein Verfahren gemäß Anspruch 1, sowie durch einen Buskoppler gemäß Anspruch , einen Busteilnehmer gemäß Anspruch 9 und ein Steuerungssystem gemäß Anspruch 11 gelöst. Vorteilhafte Ausführungsformen und Weiterbildungen sind in den jeweiligen Unteransprüchen angegeben.

Dementsprechend sieht die Erfindung ein Verfahren zur Prozess-Steuerung vor, bei dem zwischen einem zur Übertragung von Ethernet-Telegrammen ausgebildeten Netzwerk und einem unterlagerten Bussystem über einen Buskoppler, im Folgenden auch als Netzwerkkoppler bezeichnet, Daten ausgetauscht werden, wobei der Buskoppler über eine erste Schnittstelle mit dem Netzwerk und über eine zweite Schnittstelle mit dem unterlagerten Bussystem verbunden ist und wobei durch wenigstens einen Busteilnehmer des unterlagerten Bussystems Prozessdaten eingelesen und/oder ausgegeben werden. Das Verfahren ist besonders vorteilhaft zur Echtzeit-Steuerung eines Automatisierungssystems einsetzbar und sieht vor, ein Ethernet-Telegramm über die erste Schnittstelle des Buskopplers zu empfangen, das empfangene Ethernet-Telegramm in ein internes Datentelegramm umzusetzen, welches insbesondere eine kürzere Datenlänge aufweist als das empfangene Ethernet-Telegramm, und das interne Datentelegramm über die zweite Schnittstelle des Buskopplers an die Busteilnehmer des unterlagerten Bussystems auszugeben. Das unterlagerte Bussystem kann vorzugsweise als ringförmiger Übertragungsweg ausgebildet sein.

Durch die Protokollumsetzung im Buskoppler wird besonders vorteilhaft ein Overhead an Daten bei dem an die Busteilnehmer des unterlagerten Bussystems ausgegebenen internen Datentelegramm vermieden. Zu diesem Zweck werden bestimmte, im Ethernet-Telegramm enthaltene Daten nicht in das interne Datentelegramm übernommen. Vorzugsweise werden nur Daten aus dem Datenbereich des Ethernet-Telegramms übernommen, Daten des sogenannten Headers und Trailers jedoch nicht. Insbesondere werden die in der Präambel, im SFD-Feld (Start Frame Delimiter), in den Adressfeldern für Ziel- und Quelladresse, im Typ/Längen-Feld und im FCS-Feld (Frame Check Sequence) des Ethernet-Telegramms enthaltenen Daten nicht übernommen. Die aus dem Ethernet-Telegramm übernommenen Daten werden jedoch vorzugsweise ungeändert in das interne Datentelegramm übernommen. Die Protokollumsetzung im Buskoppler umfasst somit keine Umsetzung des Ethernet-Telegramms in ein anderes Standard-Protokoll.

Das Netzwerk ist vorteilhaft ein speziell für die Automatisierungstechnik, und insbesondere für Anwendungen mit Echtzeitanforderungen, angepasstes Industrial Ethernet, welches beispielsweise auf dem Standard Profinet basiert. Die Erfindung kann jedoch selbstverständlich auch in Netzwerken eingesetzt werden, welche andere bekannte Ethernet-basierte Echtzeitprotokolle unterstützen.

Vorzugsweise ist das unterlagerte Bussystem als ringförmiges Bussystem ausgebildet, wobei die Datenübertragung zwischen dem Buskoppler und den Busteilnehmern des unterlagerten Bussystems vorteilhaft mittels eines Summenrahmenprotokolls erfolgt, wobei das interne Datentelegramm als Summenrahmen auf dem ringförmigen Bussystem umläuft. Ferner erfolgt die Datenübertragung innerhalb des unterlagerten Bussystems vorteilhaft nach dem Master/Slave-Prinzip, wobei der Buskoppler den Master und die Busteilnehmer die Slaves bilden.

Bei Einsatz eines Summenrahmenprotokolls ist für jeden Busteilnehmer ein Datenblock innerhalb des Summenrahmens, also innerhalb des internen Datentelegramms, vorgesehen, auf den der jeweilige Busteilnehmer zugreifen und Daten eintragen und/oder auslesen kann.

Dementsprechend wird das vom Buskoppler zu empfangende Ethernet-Telegramm vorteilhaft von einer zur Steuerung der an das unterlagerte Bussystem angeschlossenen Busteilnehmer ausgebildeten Steuereinheit generiert und über das Netzwerk zum Buskoppler übertragen, wobei im Datenbereich des Ethernet-Telegramms individuelle Daten für eine Mehrzahl der an das unterlagerte Bussystem angeschlossenen Busteilnehmer enthalten sind.

Das Verfahren sieht selbstverständlich auch vorteilhaft vor, ein internes Datentelegramm, mit welchem die Busteilnehmer des unterlagerten Bussystems Daten ausgetauscht haben, und welches nach Umlauf auf dem ringförmigen Bus wieder vom Buskoppler als Master des unterlagerten Bussystems über dessen zweite Schnittstelle empfangen wurde, in ein Ethernet-Telegramm umzusetzen und über die erste Schnittstelle des Buskopplers an das Ethernet-basierte Netzwerk auszugeben.

Zu diesem Zweck können vorzugsweise die in einem vom Buskoppler empfangenen Ethernet-Telegramm enthaltenen Daten, wie beispielsweise Adressierungsdaten, welche nicht in das zugeordnete interne Datentelegramm übernommen werden, im Buskoppler zwischengespeichert werden.

Ferner können vorteilhaft Managementdaten zur Steuerung wenigstens eines Busteilnehmers des unterlagerten Bussystems vom Buskoppler erzeugt und in das interne Datentelegramm eingefügt werden, ohne das Zeitverhalten der Übertragung von Daten zwischen einer an das Ethernet-basierte Netzwerk angeschlossenen Steuereinheit und den Busteilnehmern des unterlagerten Bussystems zu stören.

Da statt eines Ethernet-Telegramms vorzugsweise ein gegenüber dem Ethernet-Telegramm verkürztes internes Datentelegramm auf dem ringförmigen, unterlagerten Bussystem umläuft, wird besonders vorteilhaft eine höhere Geschwindigkeit der Datenübertragung zu den Busteilnehmern des unterlagerten Bussystems erreicht, wodurch höhere Echtzeitanforderungen eingehalten werden können.

Bei Echtzeitanwendungen in der Automatisierungstechnik ist das genaue Einhalten von Zykluszeiten und somit die zeitgleiche Ein-/ und Ausgabe von Prozessinformationen aus und an den Prozess durch verschiedene Ein-/ und Ausgabegeräte von besonderer Wichtigkeit. Durch Einsatz eines Summenrahmenprotokolls und eine vorzugsweise örtliche Nähe der Busteilnehmer des unterlagerten Bussystems wird die Synchronität der Busteilnehmer unterstützt. Jitter lässt sich hierdurch jedoch nicht völlig vermeiden.

Um den verbleibenden Jitter zu vermeiden oder zumindest zu reduzieren, sieht die Erfindung besonders vorteilhaft vor, die Busteilnehmer des unterlagerten Bussystems derart auszubilden, dass die LatchIN- und LatchOUT-Zeitpunkte der Busteilnehmer parametrierbar sind. Der LatchOUT-Zeitpunkt bezeichnet dabei den Zeitpunkt, zu dem von dem jeweiligen Busteilnehmer eine Datenausgabe an den Prozess erfolgt, und der LatchIn-Zeitpunkt bezeichnet den Zeitpunkt, zu dem durch den Busteilnehmer neue Daten von der Peripherie, wie beispielsweise einem Sensor, eingelesen werden.

Dementsprechend sieht das Verfahren besonders vorteilhaft vor, dass regelmässig in fest vorgegebenen Zeitabständen interne Datentelegramme vom Buskoppler an die Busteilnehmer des unterlagerten Bussystems ausgegeben werden, wobei das Verfahren die Schritte umfasst, wenigstens ein Ausgabe- und/oder Einlese-Zeitintervall für wenigstens einen der Busteilnehmer des unterlagerten Bussystems festzulegen, durch den wenigstens einen Busteilnehmer einen durch das auf dem unterlagerten Bussystem umlaufende interne Datentelegramm festgelegten Ausgabe- und/oder Einlese-Startzeitpunkt zu erkennen, und nach Ablauf des festgelegten Ausgabe-Zeitintervalls nach Erkennen des Ausgabe-Startzeitpunktes durch den wenigstens einen Busteilnehmer Prozessdaten auszugeben und/oder nach Ablauf des festgelegten Einlese-Zeitintervalls nach Erkennen des Einlese-Startzeitpunktes Prozessdaten einzulesen. Der Ausgabe- und/oder Einlese-Startzeitpunkt wird dabei vorteilhaft durch eine Kennung innerhalb des internen Datentelegramms oder alternativ durch das Ende des internen Datentelegramms festgelegt. Es können vorzugsweise unterschiedliche Kennungen für Ausgabe- und Einlese-Startzeitpunkt vorgesehen sein. Es kann aber auch die gleiche Kennung an unterschiedlichen Positionen des internen Datentelegramms vorgesehen sein, wobei die Kennung durch den Busteilnehmer jeweils in Abhängigkeit der Position innerhalb des internen Datentelegramms als Ausgabe- bzw. Einlese-Startzeitpunkt erkannt wird. Die Kennungen zur Festlegung des Ausgabe- und/oder Einlese-Startzeitpunktes können je nach Anforderung an einer beliebigen Position innerhalb des internen Datentelegramms vorgesehen sein.

Um für alle Busteilnehmer des unterlagerten Bussystems die Einhaltung synchroner LatchIn- und LatchOUT-Zeitpunkte zu gewährleisten, werden besonders vorteilhaft für jeden Busteilnehmer des unterlagerten Bussystems unterschiedliche Ausgabe- und/oder Einlese-Zeitintervalle in Abhängigkeit von der jeweiligen Position innerhalb des unterlagerten Bussystems festgelegt, derart, dass ein Ausgeben und/oder Einlesen von Prozessdaten bei allen Busteilnehmern des unterlagerten Bussystems zeitgleich erfolgt.

Das interne Datentelegramm umfasst in der einfachsten Ausgestaltung ein Startzeichen, einen Datenbereich und ein Endezeichen. Ferner wird in einer besonders einfachen Ausgestaltung des Verfahrens beim Umsetzen des Ethernet-Telegramms in das interne Datentelegramm der Datenbereich des Ethernet-Telegramms ungeändert in den Datenbereich des internen Datentelegramms kopiert. Die oben beschriebenen Kennungen zur Festlegung des Ausgabe- und/oder Einlese-Startzeitpunktes können bei dieser Ausgestaltung des internen Datentelegramms beispielsweise im Start- oder Endezeichen enthalten, innerhalb des Datenbereiches eingefügt oder zwischen Startzeichen und Datenbereich bzw. zwischen Datenbereich und Endezeichen eingefügt sein.

Gemäß dem Ethernet-Standard hat ein Ethernet-Telegramm eine Mindestlänge von 72 Bytes, wobei der Datenbereich eines Ethernet-Telegramms eine Mindestlänge von 46 Bytes umfasst. Sollen mit einem Ethernet-Telegramm weniger als 46 Bytes an Daten übertragen werden, so werden in den Datenbereich des Ethernet-Telegramms Fülldaten eingefügt, um die vorgegebenen Mindestlängen einzuhalten.

Um eine möglichst geringe Datenlänge des internen Datentelegramms zu gewährleisten, sieht das Verfahren vorzugsweise vor, dass im Datenbereich des Ethernet-Telegramms enthaltene Nutz- und Fülldaten erkannt werden und nur die Nutzdaten in das interne Datentelegramm übernommen werden.

Ein erfindungsgemäßer Buskoppler zum Austausch von Daten zwischen einem zur Übertragung von Ethernet-Telegrammen ausgebildeten Netzwerk und einem unterlagerten Bussystem umfasst eine erste Schnittstelle zum Anschliessen an das Netzwerk, eine zweite Schnittstelle zum Anschliessen an das unterlagerte Bussystem, und eine Kontrolleinheit, welche dazu ausgebildet ist, ein über die erste Schnittstelle empfangenes Ethernet-Telegramm in ein internes Datentelegramm umzusetzen und das interne Datentelegramm über die zweite Schnittstelle auszugeben, wobei das interne Datentelegramm insbesondere eine kürzere Datenlänge aufweist als das empfangene Ethernet-Telegramm.

Ein erfindungsgemäßer Busteilnehmer zum Anschliessen an ein ringförmiges Bussystem umfasst einen in einem Speicher hinterlegten, variabel einstellbaren Wert für ein Ausgabe- und/oder Einlese-Zeitintervall und ist dazu ausgebildet, mit einem Busmaster auf Basis eines Summenrahmenprotokolls Daten auszutauschen, einen durch den auf dem Bussystem umlaufenden Datenrahmen festgelegten Ausgabe- und/oder Einlese-Startzeitpunkt zu erkennen, und nach Ablauf des eingestellten Ausgabe-Zeitintervalls nach Erkennen des Ausgabe-Startzeitpunktes Prozessdaten auszugeben und/oder nach Ablauf des eingestellten Einlese-Zeitintervalls nach Erkennen des Einlese-Startzeitpunktes Prozessdaten einzulesen. Der Ausgabe- und/oder Einlese-Startzeitpunkt ist wiederum vorzugsweise durch entsprechende Kennungen innerhalb des internen Datentelegramms oder durch das Ende des internen Datentelegramms festgelegt.

Ein erfindungsgemäßes Steuerungssystem zur Echtzeit-Steuerung eines Automatisierungssystems ist zur Durchführung eines oben beschrieben Verfahrens ausgebildet und umfasst zu diesem Zweck ein zur Übertragung von Ethernet-Telegrammen ausgebildetes Netzwerk und ein dem Netzwerk unterlagertes Bussystem, einen Buskoppler, wie oben beschrieben, welcher mit dem Netzwerk und dem unterlagerten Bussystem verbunden ist, sowie wenigstens einen an das unterlagerte Bussystem angeschlossenen Busteilnehmer, wie oben beschrieben.

Es liegen ferner vorteilhafte Ausführungsformen eines Buskopplers, eines Busteilnehmers und eines Steuerungssystems im Rahmen der Erfindung, bei denen Mittel vorgesehen sind, welche dazu geeignet sind, die oben beschriebenen vorteilhaften Ausgestaltungen des erfindungsgemäßen Verfahrens auszuführen.

Im Gegensatz zu dem in EP 1 590 927 B1 beschriebenen Verfahren sieht die Erfindung besonders vorteilhaft vor, einen Netzwerk- oder Buskoppler derart auszubilden, dass durch diesen auf dem unterlagerten Bussystem nicht ein Ethernet-Telegramm, sondern ein gegenüber dem Ethernet-Telegramm verkürztes internes Datentelegramm ausgegeben wird.

Dementsprechend liegt ferner ein Netzwerk-Koppler im Rahmen der Erfindung mit einer externen Schnittstelle zur Anbindung an ein Netzwerk, auf dem Ethernet-Telegramme übertragen werden können, und einer internen Schnittstelle zur Anbindung einer Mehrzahl von Teilnehmern in Reihe an einen ringförmigen Übertragungsweg, wobei aus einem über die externe Schnittstelle empfangenen Ethernet-Telegramm ein gegenüber dem Ethernet-Telegramm verkürztes Datentelegramm erzeugt, an die interne Schnittstelle weitergeleitet und auf den ringförmigen Übertragungsweg ausgegeben wird, und wobei jeder an die interne Schnittstelle angeschlossene Teilnehmer beim Durchlauf des verkürzten Datentelegramms auf dem ringförmigen Übertragungsweg durch den entsprechenden Teilnehmer die für den Teilnehmer bestimmten Nutzdaten mit dem auf dem Übertragungsweg umlaufenden verkürzten Datentelegramm austauscht, wobei der Teilnehmer Daten aus dem dem Teilnehmer zugeordneten Datenblock im Datenbereich des verkürzten Datentelegramms entnehmen und seinerseits Daten in den dem Teilnehmer zugeordneten Datenblock des Datenbereichs des verkürzten Datentelegramms einfügen kann.

Im Rahmen der Erfindung liegt auch ein Verfahren zum Austausch von Daten zwischen einem Netzwerk, auf dem Ethernet-Telegramme übertragen werden können, und einer Mehrzahl von Teilnehmern über einen Netzwerk-Koppler, wobei das Netzwerk an eine externe Schnittstelle des Netzwerk-Kopplers angebunden ist und die Mehrzahl von Teilnehmern über eine interne Schnittstelle des Netzwerk-Kopplers in Reihe an einen ringförmigen Übertragungsweg angebunden sind, wobei ein über die externe Schnittstelle des Netzwerk-Kopplers empfangenes Ethernet-Telegramm in ein gegenüber dem Ethernet-Telegramm verkürztes Datentelegramm umgesetzt wird, welches an die interne Schnittstelle des Netzwerk-Kopplers weitergeleitet und auf den ringförmigen Übertragungsweg ausgegeben wird, und wobei jeder an die interne Schnittstelle angeschlossene Teilnehmer beim Durchlauf des verkürzten Datentelegramms auf dem ringförmigen Übertragungsweg durch den entsprechenden Teilnehmer die für den Teilnehmer bestimmten Nutzdaten mit dem auf dem Übertragungsweg umlaufenden verkürzten Datentelegramm austauscht, wobei der Teilnehmer Daten aus dem dem Teilnehmer zugeordneten Datenblock im Datenbereich des verkürzten Datentelegramms entnehmen und seinerseits Daten in den dem Teilnehmer zugeordneten Datenblock des Datenbereichs des verkürzten Datentelegramms einfügen kann.

Auch der zuletzt beschriebene Netzwerkoppler und das zuletzt beschriebene Verfahren zum Austausch von Daten können vorteilhaft entsprechend einer oder mehrerer der oben beschriebenen vorteilhaften Ausführungsformen der Erfindung ausgebildet werden.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Darstellung einer bevorzugten Ausführungsform eines erfindungsgemäßen Steuerungssystems,
- Fig. 2:: schematisch das in dem in Fig. 1 dargestellten Steuerungssystem enthaltene unterlagerte Bussystem,
- Fig. 3:: ein schematisches Zeitdiagramm zur Darstellung der parametrierbaren Latchzeiten der Busteilnehmer des in Fig. 2 dargestellten unterlagerten Bussystems, wobei der jeweilige Startzeitpunkt der Latchzeiten durch das Ende des internen Datentelegramms festgelegt ist,
- Fig. 3a:: ein schematisches Zeitdiagramm zur Darstellung der parametrierbaren Latchzeiten der Busteilnehmer des in Fig. 2 dargestellten unterlagerten Bussystems, wobei der jeweilige Startzeitpunkt der Latchzeiten durch Kennungen innerhalb des internen Datentelegramms festgelegt ist, und
- Fig. 4:: schematisch den Aufbau eines Ethernet-Telegramms und den Aufbau eines beispielhaften internen Datentelegramms, in welches ein empfangenes Ethernet-Telegramm durch einen erfindungsgeäßen Buskoppler umgesetzt wird.

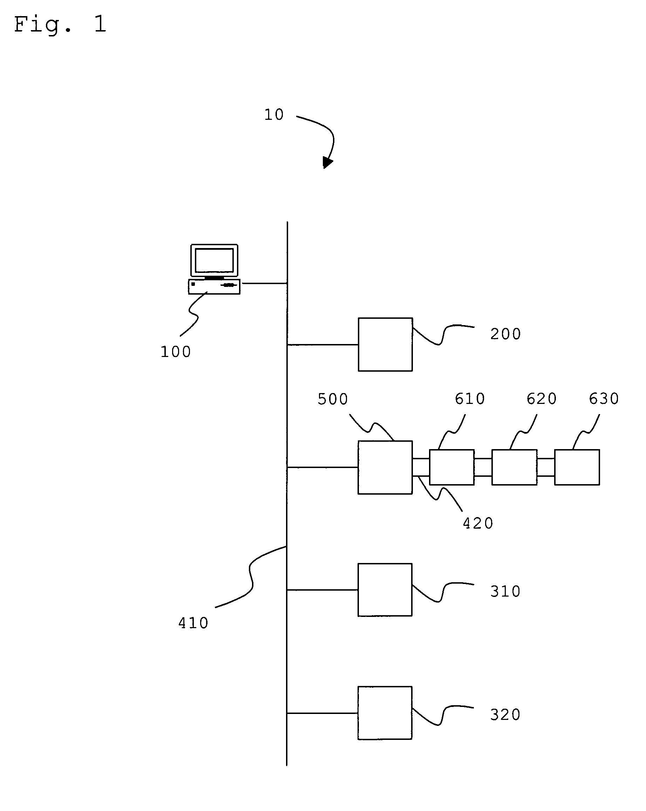

Ein erfindungsgemäßes Steuerungssystem 10, ausgebildet zur Ausführung eines erfindungsgemäßen Verfahrens, ist in Fig. 1 dargestellt. An ein zur Übertragung von Ethernet-Telegrammen ausgebildetes Netzwerk 410 sind zur Steuerung eines Automatisierungssystems die mit einer Ethernet-Schnittstelle ausgerüsteten Geräte 100, 200, 310, 320 und 500 angeschlossen. Das Netzwerk 410 ist vorzugsweise als Profinet ausgebildet, an das in der dargestellten Ausführungsform ein Personal Computer 100 zur Konfiguration und Visualisierung des Steuerprozesses, eine Steuereinheit 200 zur Steuerung des Prozesses, sowie beispielhaft weitere Ethernet-fähige Feldgeräte 310 und 320 angeschlossen sind. Ferner ist an das Netzwerk 410 ein Buskoppler 500 zum Datenaustausch mit einem unterlagerten Bussystem 420 angeschlossen. Um den Verkabelungsaufwand gering zu halten, sind die an das Netzwerk 410 angeschlossenenen Geräte vorzugsweise in Reihe geschaltet. Das Netzwerk 410 kann jedoch auch jede andere geeignete Topologie aufweisen.

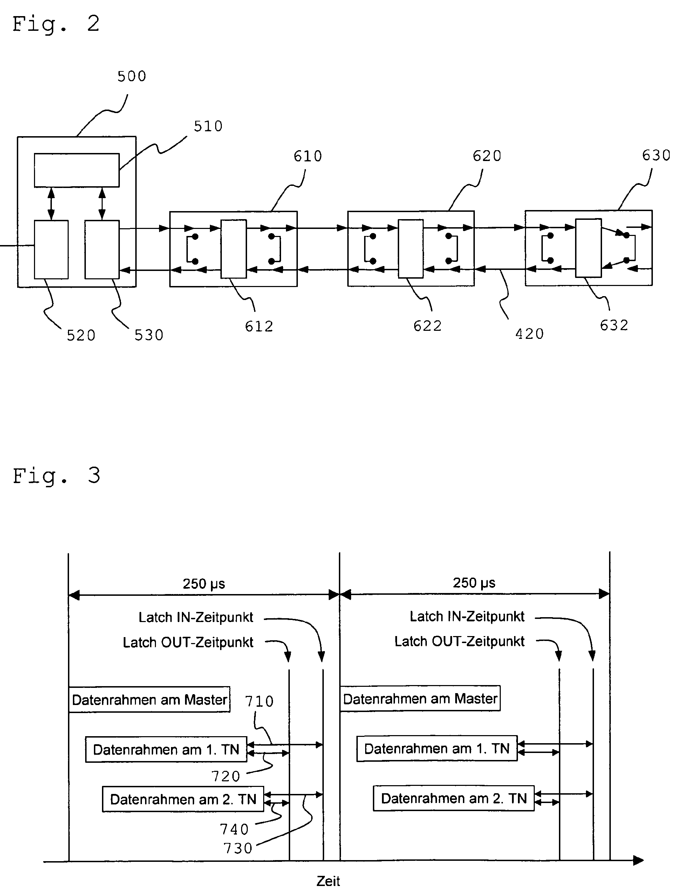

Die Erfindung sieht vor, für Teilnehmer mit einer geringen Datenbreite, wie die dargestellten Teilnehmer 610, 620 und 630, einen gemeinsamen Ethernet-Frame zu benutzen, der die Teilnehmer mit Daten versorgt. Als Bindeglied wird ein Buskoppler 500 eingesetzt, der eine Ethernetschnittstelle zum Anschliessen an das Netzwerk 410 aufweist und als Master ausgebildet ist, der den unterlagerten Bus 420, an den die Busteilnehmer 610, 620 und 630 angeschlossen sind, bedient. In Fig. 2 ist der zur Anbindung des unterlagerten Bussystems 420 eingesetzte Buskoppler 500 im Detail dargestellt. Der Buskoppler 500 umfasst eine erste Schnittstelle 520 zum Anschliessen an das Ethernet-basierte Netzwerk 410, eine zweite Schnittstelle 530 zum Anschliessen an das unterlagerte Bussystem 420, sowie eine Kontrolleinheit 510, welche dazu ausgebildet ist, über die erste Schnittstelle empfangene Ethernet-Telegramme in interne Datentelegramme umzusetzen und über die zweite Schnittstelle an das unterlagerte Bussystem 420 auszugeben.

Das unterlagerte Bussystem 420 arbeitet nach dem Master/ Slave-System, wobei der Buskoppler 500, welcher auch als PC ausgebildet sein kann, die Masterfunktionalität enthält und die Busteilnehmer 610, 620 und 630 die Slaves darstellen, wobei die Busteilnehmer in einem logischen Ring an den Master angekoppelt sind.

Die Busteilnehmer 610, 620 und 630 brauchen vorteilhaft nicht mit einer Ethernet-Schnittstelle ausgestattet zu werden, da sie räumlich sehr nahe aneinander angereiht sind. Als Protokoll wird in dem unterlagerten Bussystem 420 nicht Ethernet übertragen, sondern ein eigenes Protokoll, dass einen geringeren Overhead aufweist. Die in den jeweiligen Busteilnehmern 610, 620 und 630 angeordneten Logikbausteine 612, 622 und 632 werden derart verschaltet, dass die Busteilnehmer 610, 620 und 630 in einem ringförmigen Übertragungsweg miteinander verbunden sind, so dass ein Summenrahmenprotokoll eingesetzt werden kann.

Die Synchronität der Teilnehmer wird durch das Summenrahmenprotokoll und die geringe Ausdehnung unterstützt. Der verbleibende Jitter der Teilnehmer wird durch parametrierbare LatchIN- und LatchOUT-Zeitpunkte in den Teilnehmern weiter reduziert, um noch kürzere Zykluszeiten realisieren und höhere Echtzeitanforderungen erfüllen zu können.

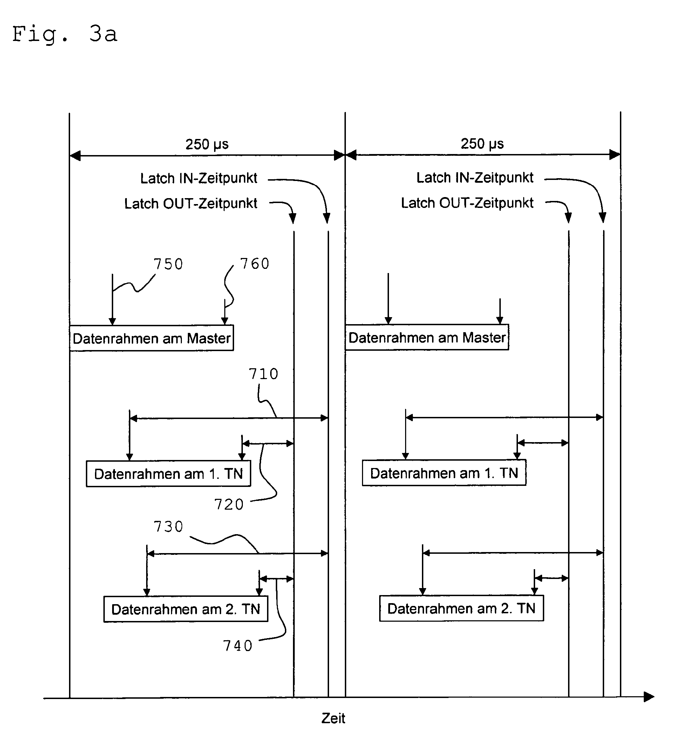

Zu diesem Zweck werden, wie in Fig. 3 und Fig. 3a dargestellt, regelmässig in fest vorgegebenen Zeitabständen von beispielsweise 250 µs interne Datentelegramme vom Buskoppler 500 als Master an die Busteilnehmer 610, 620, 630 als Slaves des unterlagerten Bussystems 420 ausgegeben. Für jeden der Busteilnehmer 610, 620, 630 wird, beispielsweise bei Parametrierung des Steuerungssystems 10, ein Ausgabe-Zeitintervall und ein Eingabe-Zeitintervall festgelegt und in dem jeweiligen Busteilnehmer hinterlegt.

Durch unterschiedlich festgelegte Ausgabe- und Eingabe-Zeitintervalle der Busteilnehmer 610, 620 und 630 werden für alle Busteilnehmer die jeweiligen LatchIN- und LatchOUT-Zeitpunkte synchronisiert und dadurch der Jitter reduziert. Dementsprechend erfolgt das Ausgeben und/oder Einlesen von Prozessdaten durch die Busteilnehmer 610, 620 und 630, welche im dargestellten Ausführungsbeispiel als E/A-Feldgeräte zur Prozesssteuerung ausgebildet sind, nach Ablauf des jeweils festgelegten Ausgabe- beziehungsweise Einlese-Zeitintervalls, wobei der Beginn des jeweiligen Zeitintervalls durch einen entsprechenden Ausgabe- bzw. Einlese-Startzeitpunkt definiert ist. Bei der in Fig. 3 dargestellten Ausführungsform sind sowohl der Ausgabe- als auch der Einlese-Startzeitpunkt durch den Zeitpunkt definiert, in dem durch den jeweiligen Busteilnehmer das Ende eines auf dem unterlagerten Bussystem umlaufenden internen Datentelegramms erkannt wird. Bei der in Fig. 3a dargestellten Ausführungsform sind innerhalb jedes auf dem unterlagerten Bussystem umlaufenden internen Datentelegramms Kennungen 750 und 760 vorgesehen, wobei der Ausgabe-Startzeitpunkt durch den Zeitpunkt definiert ist, in dem durch den jeweiligen Busteilnehmer die Kennung 760 erkannt wird und der Einlese-Startzeitpunkt durch den Zeitpunkt definiert ist, in dem durch den jeweiligen Busteilnehmer die Kennung 750 erkannt wird.

In Fig. 3 und Fig. 3a ist jeweils schematisch ein Zeitdiagramm dargestellt, in welchem jeweils der Zeitraum angegeben ist, während dessen der durch das jeweilige interne Datentelegramm definierte Datenrahmen am Master, d.h dem Buskoppler 500, und beispielhaft an dem ersten und zweiten Teilnehmer, anliegt, wobei der erste Teilnehmer dem Busteilnehmer 610 und der zweite Teilnehmer dem Busteilnehmer 620, wie in Fig. 2 dargestellt, entspricht. In Fig. 3 und Fig. 3a ist für den beispielhaften ersten Teilnehmer, entsprechend dem Busteilnehmer 610, das Ausgabe-Zeitintervall zur Bestimmung des LatchOUT-Zeitpunkts mit dem Bezugszeichen 720 und das Einlese-Zeitintervall zur Bestimmung des LatchIN-Zeitpunkts mit dem Bezugszeichen 710 bezeichnet. Entsprechend ist für den zweiten Teilnehmer, entsprechend dem Busteilnehmer 620, das Ausgabe-Zeitintervall mit dem Bezugszeichen 740 und das Einlese-Zeitintervall mit dem Bezugszeichen 730 bezeichnet. Zur vereinfachten Darstellung ist der in Fig. 2 dargestellte Busteilnehmer 630 in Fig. 3 und Fig. 3a nicht berücksichtigt, jedoch ist dieser in analoger Weise wie die in Fig. 3 und Fig. 3a dargestellten ersten und zweiten Teilnehmer parametriert.

In dem Ethernet-basierten Profinet System 410 werden Ethernet-Datenrahmen vom Profinet-Controller 200 generiert und zu den verschiedenen Profinet-Geräten, wie zum Beispiel die Geräte 310 und 320, versandt. Da das Profinet-System ein Echtzeit-System ist, werden die Zeitpunkte für Latch In und Latch OUT der Prozessdaten synchronisiert, so dass ein Datenwechsel an allen Profinet-Geräten gleichzeitig erfolgt. Jedes Gerät bekommt einen festen Zeitpunkt zugewiesen, in der seine Eingangs- und Diagnose-Daten als Datenrahmen zum Controller 200 übertragen werden.

Der Buskoppler 500 mit seinen angeschlossenen Busteilnehmern 610, 620 und 630 ist in dem Profinet-System 410 immer nur als ein Gerät zu sehen. Die angekoppelten Busteilnehmer 610, 620 und 630 werden als Slots des Profinet-Gerätes verwaltet. Um die Busteilnehmer 610, 620 und 630 mit Daten zu versorgen, wird im Buskoppler 500 der Profinet-Datenrahmen empfangen und die Prozessdaten in einen Zwischenspeicher geschrieben. Der Buskoppler 500 als Master des unterlagerten Bussystems 420 generiert in Abhängigkeit der zwischengespeicherten Daten einen internen Datenrahmen und schickt die Daten an die Busteilnehmer 610, 620 und 630.

Um die Echtzeitfähigkeit zu erhalten, werden die Ausgangsdaten in den Busteilnehmern 610, 620 und 630 empfangen und gemäß der Parametrierung des jeweiligen LatchOut-Zeitpunktes aktiv geschaltet. Eingangsdaten werden im unterlagerten Bussystem 420 in die Busteilnehmer 610, 620 und 630 zu einem bestimmten Zeitpunkt vor Start des nächsten internen Zyklus eingelesen. Der Latchzeitpunkt für jeden Busteilnehmer ist parametrierbar, wobei es für die Parametrierung des LatchIN insbesondere wichtig ist, dass interne Datenrahmen im unterlagerten Bussystem 420 immer in genauen Zeitabständen vom Master 500 gesendet werden. Jeder Busteilnehmer 610, 620 und 630 erkennt einen Einlese-Startzeitpunkt - durch Erkennen einer Kennung innerhalb eines internen Datenrahmens wie in Fig. 3a dargestellt oder durch Erkennen des Endes eines internen Datenrahmens wie in Fig. 3 dargestellt - und kann die Zeit ab da für die Bestimmung des LatchIN-Zeitpunktes abmessen.

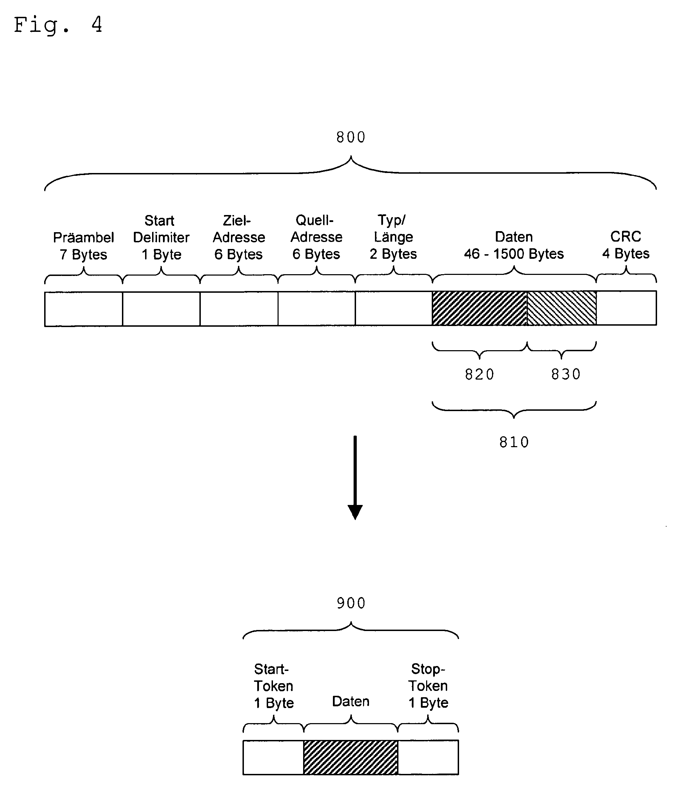

In Fig. 4 ist beispielhaft ein Ethernet-Datenrahmen 800 dargestellt, sowie eine einfache Ausführungsform eines internen Datentelegramms 900, welches durch den Buskoppler 500 aus einem empfangenen Ethernet-Datenrahmen 800 erzeugt wird. In das interne Datentelegramm 900 werden im dargestellten Ausführungsbeispiel nur Daten aus dem Datenbereich 810 des Ethernet-Datenrahmens 800 übernommen.

Der Datenbereich 810 eines standardkonformen Ethernet-Datenrahmens 800 umfasst wenigstens 46 Bytes an Daten, wobei gegebenenfalls Nutzdaten 820 mit Fülldaten 830 aufgefüllt werden, um auf die insgesamt wenigstens 46 Bytes zu kommen. Um eine möglichst geringe Datenlänge des internen Datentelegramms 900 zu gewährleisten, ist vorteilhaft vorgesehen, die im Datenbereich 810 des Ethernet-Telegramms 800 enthaltenen Nutz- 820 und Fülldaten 830 durch den Buskoppler 500 zu erkennen und nur die Nutzdaten 820 als Daten in das interne Datentelegramm 900 zu übernehmen.

Das unterlagerte Bussystem 420 ist durch seinen Aufbau in der Lage Echtzeit-Daten mit einem geringen Jitter und hohem Datendurchsatz zu übertragen. Diagnose- und Parameter-Daten verändern das Zeitverhalten des Systems nicht. Management-Informationen können ebenfalls ohne Änderung des Zeitverhaltens übertragen werden. Durch die Konzentration auf die Nutzdaten des Ethernet-Datenrahmens wird eine hohe Effizienz im verwendeten internen Datentelegramm erreicht. Das Protokoll ist ferner vorteilhaft derart angelegt, dass eine strukturierte Architektur des unterlagerten Bussystems 420 möglich ist.

Bei einer besonders bevorzugten Ausführungsform stimmt die Datenübertragungsrate des internen Datentelegramms im Wesentlichen mit der Datenübertragungsrate des überlagerten Ethernet-Telegramms überein. Folglich können intern, da das interne Telegramm kürzer ist, pro Zeiteinheit mehr Telegramme übertragen werden, als vom überlagerten Bussystem empfangen werden.

Hierdurch können entweder weitere Informationen, beispielsweise zur internen Steuerung, wie beispielsweise bei sicherheitsgerichteten Systemen oder Managementdaten, übertragen werden.

## Patentansprüche

1. Verfahren zur Prozess-Steuerung, bei dem zwischen einem zur Übertragung von Ethernet-Telegrammen ausgebildeten Netzwerk (410) und einem unterlagerten Bussystem (420) über einen Buskoppler (500) Daten ausgetauscht werden, wobei der Buskoppler (500) über eine erste Schnittstelle (520) mit dem Netzwerk (410) und über eine zweite Schnittstelle (530) mit dem unterlagerten Bussystem (420) verbunden ist, wobei das unterlagerte Bussystem (420) als ringförmiges Bussystem ausgebildet ist und die Datenübertragung zwischen dem Buskoppler (500) und den Busteilnehmern (610, 620, 630) des unterlagerten Bussystems (420) mittels eines Summenrahmenprotokolls erfolgt, und wobei durch wenigstens einen Busteilnehmer (610, 620, 630) des unterlagerten Bussystems (420) Prozessdaten eingelesen und/oder ausgegeben werden, mit den Schritten
- Empfangen eines ersten Datentelegramms in Form eines Ethernet-Telegramms (800) über die erste Schnittstelle (520) des Buskopplers (500), wobei das erste Datentelegramm (800) von einer zur Steuerung der an das unterlagerte Bussystem (420) angeschlossenen Busteilnehmer (610, 620, 630) ausgebildeten Steuereinheit (200) generiert und über das Netzwerk (410) zum Buskoppler (500) übertragen wird, wobei im Datenbereich (810) des ersten Datentelegramms (800) individuelle Daten (820) für eine Mehrzahl der an das unterlagerte Bussystem (420) angeschlossenen Busteilnehmer (610, 620, 630) enthalten sind,
- Umsetzen des empfangenen ersten Datentelegramms (800) in ein zweites Datentelegramm (900), wobei in das zweite Datentelegramm die individuellen Daten (820) für eine Mehrzahl der an das unterlagerte Bussystem (420) angeschlossenen Busteilnehmer (610, 620, 630) aus dem Datenbereich des ersten Datentelegramms ungeändert übernommen und bestimmte, im ersten Datentelegramm enthaltene Daten nicht übernommen werden,
- Ausgeben des zweiten Datentelegramms (900) über die zweite Schnittstelle (530) des Buskopplers (500) an die Busteilnehmer (610, 620, 630) des unterlagerten Bussystems (420).

2. Verfahren nach einem der vorstehenden Ansprüche, wobei die Datenübertragung innerhalb des unterlagerten Bussystems (420) nach dem Master/Slave-Prinzip erfolgt, wobei der Buskoppler (500) den Master und die Busteilnehmer (610, 620, 630) die Slaves bilden.

3. Verfahren nach einem der vorstehenden Ansprüche, wobei vom Buskoppler (500) Managementdaten zur Steuerung wenigstens eines Busteilnehmers (610, 620, 630) des unterlagerten Bussystems (420) erzeugt und in das zweite Datentelegramm (900) eingefügt werden.

4. Verfahren nach einem der vorstehenden Ansprüche, wobei regelmässig in fest vorgegebenen Zeitabständen zweite Datentelegramme (900) vom Buskoppler (500) an die Busteilnehmer (610, 620, 630) des unterlagerten Bussystems (420) ausgegeben werden, ferner umfassend die Schritte:
- Festlegen wenigstens eines Ausgabe- und/oder Einlese-Zeitintervalls (710, 720, 730, 740) für wenigstens einen der Busteilnehmer (610, 620, 630) des unterlagerten Bussystems (420),
- Erkennen eines durch das zweite Datentelegramm (900) festgelegten Ausgabe- und/oder Einlese-Startzeitpunktes durch den wenigstens einen Busteilnehmer (610, 620, 630), und
- Ausgeben von Prozessdaten durch den wenigstens einen Busteilnehmer (610, 620, 630) nach Ablauf des festgelegten Ausgabe-Zeitintervalls (720, 740) nach Erkennen des Ausgabe-Startzeitpunktes und/oder Einlesen von Prozessdaten durch den wenigstens einen Busteilnehmer (610, 620, 630) nach Ablauf des festgelegten Einlese-Zeitintervalls (710, 730) nach Erkennen des Einlese-Startzeitpunktes.

5. Verfahren nach Anspruch 4, wobei der Ausgabe- und/oder Einlese-Startzeitpunkt durch eine Kennung (750, 760) innerhalb des zweiten Datentelegramms oder durch das Ende des zweiten Datentelegramms festgelegt ist.

6. Verfahren nach Anspruch 4 oder 5, wobei für jeden Busteilnehmer (610, 620, 630) des unterlagerten Bussystems (420) unterschiedliche Ausgabe- und/oder Einlese-Zeitintervalle (710, 720, 730, 740) in Abhängigkeit von der jeweiligen Position innerhalb des unterlagerten Bussystems (420) festgelegt werden, derart, dass ein Ausgeben und/oder Einlesen von Prozessdaten bei allen Busteilnehmern (610, 620, 630) des unterlagerten Bussystems (420) zeitgleich erfolgt.

7. Verfahren nach einem der vorstehenden Ansprüche, wobei im Datenbereich (810) des ersten Datentelegramms (800) enthaltene Nutz- (820) und Fülldaten (830) erkannt werden und nur die Nutzdaten (820) in das zweite Datentelegramm (900) übernommen werden.

8. Buskoppler (500) zum Austausch von Daten zwischen einem zur Übertragung von Ethernet-Telegrammen ausgebildeten Netzwerk (410) und einem unterlagerten Bussystem (420), wobei das unterlagerte Bussystem (420) als ringförmiges Bussystem und zur Datenübertragung mittels eines Summenrahmenprotokolls ausgebildet ist, umfassend
- eine erste Schnittstelle (520) zum Anschliessen an das Netzwerk (410),
- eine zweite Schnittstelle (530) zum Anschliessen an das unterlagerte Bussystem (420), und
- eine Kontrolleinheit (510), welche dazu ausgebildet ist, ein über die erste Schnittstelle (520) in Form eines Ethernet-Telegramms (800) empfangenes erstes Datentelegramm in ein zweites Datentelegramm (900) umzusetzen und das zweite Datentelegramm über die zweite Schnittstelle auszugeben, wobei in das zweite Datentelegramm Daten aus dem Datenbereich des ersten Datentelegramms ungeändert übernommen und bestimmte, im ersten Datentelegramm enthaltene Daten nicht übernommen werden.

9. Busteilnehmer (610, 620, 630) zum Anschliessen an ein ringförmiges Bussystem (420) mit einem in einem Speicher hinterlegten, variabel einstellbaren Wert für ein Ausgabe- und/oder Einlese-Zeitintervall, dazu ausgebildet,
- mit einem Busmaster (500) auf Basis eines Summenrahmenprotokolls Daten auszutauschen,
- einen durch den auf dem Bussystem (420) umlaufenden Datenrahmen festgelegten Ausgabe- und/oder Einlese-Startzeitpunkt zu erkennen, und
- nach Ablauf des eingestellten Ausgabe-Zeitintervalls (72.0, 740) nach Erkennen des Ausgabe-Startzeitpunktes Prozessdaten auszugeben und/oder nach Ablauf des eingestellten Einlese-Zeitintervalls (710, 730) nach Erkennen des Einlese-Startzeitpunktes Prozessdaten einzulesen,
wobei das unterlagerte Bussystem (420) als ringförmiges Bussystem und zur Datenübertragung mittels eines Summenrahmenprotokolls ausgebildet ist, und einen Buskoppler aufweist, welcher folgende Merkmale umfasst:
- eine erste Schnittstelle (520) zum Anschliessen an ein Netzwerk (410),
- eine zweite Schnittstelle (530) zum Anschliessen an das unterlagerte Bussystem (420), und
- eine Kontrolleinheit (510), welche dazu ausgebildet ist, ein über die erste Schnittstelle (520) in Form eines Ethernet-Telegramms (800) empfangenes erstes Datentelegramm in ein zweites Datentelegramm (900) umzusetzen und das zweite Datentelegramm über die zweite Schnittstelle auszugeben, wobei in das zweite Datentelegramm Daten aus dem Datenbereich des ersten Datentelegramms ungeändert übernommen und bestimmte, im ersten Datentelegramm enthaltene Daten nicht übernommen werden

10. Busteilnehmer nach Anspruch 9, wobei der Ausgabe- und/oder Einlese-Startzeitpunkt durch eine Kennung (750, 760) innerhalb des Datenrahmens oder durch das Ende des Datenrahmens festgelegt ist.

11. Steuerungssystem (10) zur Echtzeit-Steuerung eines Automatisierungssystems, ausgebildet zur Durchführung eines Verfahrens gemäß einem der Ansprüche 1 bis 7, umfassend
- ein zur Übertragung von Ethernet-Telegrammen ausgebildetes Netzwerk (410),
- ein dem Netzwerk (410) unterlagertes Bussystem (420), wobei das unterlagerte Bussystem (420) als ringförmiges Bussystem ausgebildet ist,
- einen Buskoppler (500) gemäß Anspruch 8, welcher mit dem Netzwerk (410) und dem unterlagerten Bussystem (420) verbunden ist, und
- wenigstens einen an das unterlagerte Bussystem (420) angeschlossenen Busteilnehmer (610, 620, 630) gemäß einem der Ansprüche 9 oder 10.

## Claims

1. A method for process control, in which data are exchanged between a network (410) configured for transmitting Ethernet telegrams and a lower-level bus system (420) via a bus coupler (500), wherein the bus coupler (500) is connected to the network (410) via a first interface (520) and to the lower-level bus system (420) via a second interface (530), wherein the lower-level bus system (420) is configured as a ring-shaped bus system and data transfer between the bus coupler (500) and the bus subscribers (610, 620, 630) of the lower-level bus system (420) is accomplished by means of a sum frame protocol, and wherein process data are read in and/or output by at least one bus subscriber (610, 620, 630) of the lower-level bus system (420), comprising the steps of:
- receiving a first data telegram in form of an Ethernet telegram (800) via the first interface (520) of the bus coupler (500), wherein the first data telegram (800) is generated by a control unit (200) adapted to control the bus subscribers (610, 620, 630) connected to the lower-level bus system (420) and is transferred to the bus coupler (500) via the network (410), wherein the data area (810) of the first data telegram (800) contains individual data (820) for a plurality of the bus subscribers (610, 620, 630) connected to the lower-level bus system (420);
- converting the received first data telegram (800) into a second data telegram (900), wherein the individual data (820) for a plurality of bus subscribers (610, 620, 630) connected to the lower-level bus system (420) are transferred unchanged from the data area of the first data telegram into the second data telegram, and specific data contained in the first data telegram are not transferred; and
- outputting the second data telegram (900) via the second interface (530) of the bus coupler (500) to the bus subscribers (610, 620, 630) of the lower-level bus system (420).

2. The method according to any of the preceding claims, wherein data transfer in the lower-level bus system (420) is performed according to the master/slave principle, wherein the bus coupler (500) forms the master and the bus subscribers (610, 620, 630) form the slaves.

3. The method according to any of the preceding claims, wherein management data for controlling at least one bus subscriber (610, 620, 630) of the lower-level bus system (420) are generated by the bus coupler (500) and are inserted into the second data telegram (900).

4. The method according to any of the preceding claims, wherein at fixed predetermined time intervals second data telegrams (900) are regularly output by the bus coupler (500) to the bus subscribers (610, 620, 630) of the lower-level bus system (420), further comprising the steps of:
- defining at least one output and/or read-in time interval (710, 720, 730, 740) for at least one of the bus subscribers (610, 620, 630) of the lower-level bus system (420);
- identifying, by the at least one bus subscriber (610, 620, 630), an output and/or read-in start time defined by the second data telegram (900); and
- after identification of the output start time, outputting process data by the at least one bus subscriber (610, 620, 630) after the defined output time interval (720, 740) has elapsed, and/or after identification of the read-in start time, reading of process data by the at least one bus subscriber (610, 620, 630) after the defined read-in time interval (710, 730) has elapsed.

5. The method according to claim 4, wherein the output and/or read-in start time is defined by a tag (750, 760) within the second data telegram or by the end of the second data telegram.

6. The method according to claim 4 or 5, wherein different output and/or read-in time intervals (710, 720, 730, 740) are defined for each bus subscriber (610, 620, 630) of the lower-level bus system (420) as a function of the respective position within the lower-level bus system (420), such that output and/or read-in of process data takes place simultaneously for all bus subscribers (610, 620, 630) of the lower-level bus system (420).

7. The method according to any one of the preceding claims, wherein payload data (820) and filler data (830) contained in the data area (810) of the first data telegram (800) are identified and only the payload data (820) are transferred into the second data telegram (900).

8. A bus coupler (500) for exchanging data between a network (410) configured for transmitting Ethernet telegrams and a lower-level bus system (420), wherein the lower-level bus system (420) is configured as a ring-shaped bus system and is adapted for data transfer by means of a sum frame protocol, comprising:
- a first interface (520) for connecting to the network (410);
- a second interface (530) for connecting to the lower-level bus system (420); and
- a control unit (510) adapted to convert a first data telegram in form of an Ethernet telegram (800) received via the first interface (520) into an second data telegram (900) and to output the second data telegram via the second interface, wherein data from the data area of the first data telegram are transferred unchanged into the second data telegram and specific data contained in the first data telegram are not transferred.

9. A bus subscriber (610, 620, 630) for connection to a ring-shaped bus system (420), with a variably adjustable value for an output and/or read-in time interval stored in a memory, adapted for:
- exchanging data with a bus master (500) on the basis of a sum frame protocol;
- identifying an output and/or read-in start time defined by a data frame circulating on the bus system (420); and
- after identification of the output start time, outputting process data after the defined output time interval (720, 740) has elapsed, and/or after identification of the read-in start time, reading process data after the allocated read-in time interval (710, 730) has elapsed;
wherein the lower-level bus system (420) is configured as a ring-shaped bus system and for data transfer by means of a sum frame protocol, and comprises a bus coupler, which comprises the following features:
- a first interface (520) for connecting to the network (410);
- a second interface (530) for connecting to the lower-level bus system (420); and
- a control unit (510) adapted to convert a first data telegram in form of an Ethernet telegram (800) received via the first interface (520) into an second data telegram (900) and to output the second data telegram via the second interface, wherein data from the data area of the first data telegram are transferred unchanged into the second data telegram and specific data contained in the first data telegram are not transferred.

10. The bus subscriber according to claim 9, wherein the output and/or read-in start time is defined by a tag (750, 760) within the data frame or by the end of the data frame.

11. A control system (10) for real-time control of an automation system, configured for performing a method according to any of claims 1 to 7, comprising:
- a network (410) adapted for transmitting Ethernet telegrams;
- a lower-level bus system (420) under the network (410), wherein said lower-level bus system (420) is configured as a ring-shaped bus system;
- a bus coupler (500) according to claim 8, connected to the network (410) and to the lower-level bus system (420); and
- at least one bus subscriber (610, 620, 630) according to any of claims 9 or 10, connected to the lower-level bus system (420).

## Revendications

1. Procédé de contrôle de processus, dans lequel, entre un réseau (410) conçu pour la transmission de télégrammes Ethernet et un système de bus sous-jacent (420), des données sont échangées par l'intermédiaire d'un coupleur de bus (500), le coupleur de bus (500) étant relié au réseau (410) par l'intermédiaire d'une première interface (520) et au système de bus sous-jacent (420) par l'intermédiaire d'une deuxième interface (530), le système de bus sous-jacent (420) étant conçu comme un système de bus annulaire et la transmission des données entre le coupleur de bus (500) et les abonnés (610, 620, 630) du système de bus sous-jacent (420) ayant lieu au moyen d'un protocole de contrôle des sommes et au moins un abonné (610, 620, 630) du système de bus sous-jacent (420) permettant de lire et/ou d'envoyer des données de processus, comprenant les étapes suivantes :
- réception d'un premier télégramme de données sous la forme d'un télégramme Ethernet (800) par l'intermédiaire de la première interface (520) du coupleur de bus (500), le premier télégramme de données (800) étant généré par une unité de commande (200) conçue pour commander les abonnés (610, 620, 630) connectés au système de bus sous-jacent (420) et étant transmis par l'intermédiaire du réseau (410) au coupleur de bus (500), des données individuelles (820) pour une pluralité d'abonnés (610, 620, 630) connectés au système de bus sous-jacent (420) étant contenues dans la zone de données (810) du premier télégramme de données (800),
- conversion du premier télégramme de données (800) reçu en un deuxième télégramme de données (900), les données individuelles (820) pour une pluralité d'abonnés (610, 620, 630) connectés au système de bus sous-jacent (420), provenant de la zone de données du premier télégramme de données, étant prises en compte de manière inchangée dans le deuxième télégramme de données et les certaines données contenues dans le premier télégramme de données n'étant pas prises en compte,
- envoi du deuxième télégramme de données (900), par l'intermédiaire de la deuxième interface (530) du coupleur de bus (500), aux abonnés (610, 620, 630) du système de bus sous-jacent (420).

2. Procédé selon l'une des revendications précédentes, dans lequel la transmission des données à l'intérieur du système de bus sous-jacent (420) a lieu selon le principe maître/esclave, le coupleur de bus (500) étant le maître et les abonnés du bus (610, 620, 630) étant les esclaves.

3. Procédé selon l'une des revendications précédentes, dans lequel des données de gestion pour le contrôle d'au moins un abonné (610, 620, 630) du système de bus sous-jacent (420) sont générées par le coupleur de bus (500) et insérées dans le deuxième télégramme de données (900).

4. Procédé selon l'une des revendications précédentes, dans lequel des deuxièmes télégrammes de données (900) sont envoyés régulièrement, à des intervalles de temps prédéterminés, par le coupleur de bus (500), aux abonnés (610, 620, 630) du système de bus sous-jacent (420), comprenant en outre les étapes suivantes :
- détermination d'au moins un intervalle de temps d'envoi et/ou de lecture (710, 720, 730, 740) pour au moins un des abonnés (610, 620, 630) du système de bus sous-jacent (420),
- détection d'un moment de démarrage d'envoi et/ou de lecture déterminé par le deuxième télégramme de données (900) par l'au moins un abonné (610, 620, 630), et
- envoi de données de processus par l'au moins un abonné (610, 620, 630) après l'écoulement de l'intervalle de temps d'envoi (720, 740) déterminé après détection du moment de démarrage d'envoi et/ou lecture de données de processus par l'au moins un abonné (610, 620, 630) après l'écoulement de l'intervalle de temps de lecture (710, 730) déterminé après détection du moment de démarrage de lecture.

5. Procédé selon la revendication 4, dans lequel le moment de démarrage d'envoi et/ou de lecture est déterminé par un identifiant (750, 760) à l'intérieur du deuxième télégramme de données ou par la fin du deuxième télégramme de données.

6. Procédé selon la revendication 4 ou 5, dans lequel, pour chaque abonné (610, 620, 630) du système de bus sous-jacent (420), différents intervalles de temps d'envoi et/ou de lecture (710, 720, 730, 740) sont déterminés, en fonction de la position correspondante, à l'intérieur du système de bus sous-jacent (420), de façon à ce qu'un envoi et/ou lecture de données de processus a lieu en même temps pour tous les abonnés (610, 620, 630) du système de bus sous-jacent (420).

7. Procédé selon l'une des revendications précédentes, dans lequel les données utilitaires (820) et de remplissage (830) contenues dans la zone de données (810) du premier télégramme de données (800) sont détectées et seules les données utilitaires (820) sont prises en compte dans le deuxième télégramme de données (900).

8. Coupleur de bus (500) pour l'échange de données entre un réseau (410) conçu pour la transmission de télégrammes de données Ethernet et un système de bus sous-jacent (420), le système de bus sous-jacent (420) étant conçu comme un système de bus annulaire et pour la transmission de données au moyen d'un protocole de contrôle des sommes, comprenant :
- une première interface (520) pour le raccordement au réseau (410),
- une deuxième interface (530) pour le raccordement au système de bus sous-jacent (420), et
- une unité de contrôle (510) conçue pour convertir un premier télégramme de données reçu par l'intermédiaire de la première interface (520) sous la forme d'un télégramme Ethernet (800) en un deuxième télégramme de données (900) et pour envoyer le deuxième télégramme de données par l'intermédiaire de la deuxième interface, les données provenant de la zone de données du premier télégramme de données étant prises en compte de manière inchangée dans le deuxième télégramme de données et certaines données contenues dans le premier télégramme de données n'étant pas prises en compte.

9. Abonné de bus (610, 620, 630) pour le raccordement à un système de bus annulaire (420) avec une valeur réglable de manière variable, enregistrée dans une mémoire, pour un intervalle de temps d'envoi et/ou de lecture, conçu pour :
- échanger des données avec un maître de bus (500), sur la base d'un protocole de contrôle des sommes,
- détecter un moment de démarrage d'envoi et/ou de lecture déterminé par le cadre de données circulant sur le système de bus (420), et
- après l'écoulement de l'intervalle de temps d'envoi réglé (720, 740), après la détection du moment de démarrage d'envoi, envoyer des données de processus et/ou, après l'écoulement de l'intervalle de temps de lecture réglé (710, 730), après la détection du moment de démarrage de lecture, lire des données de processus,
le système de bus sous-jacent (420) étant conçu comme un système de bus annulaire et pour la transmission de données au moyen d'un protocole de contrôle des sommes et comprenant un coupleur de bus qui présente les caractéristiques suivantes :
- une première interface (520) pour le raccordement à un réseau (410),
- une deuxième interface (530) pour le raccordement au système de bus sous-jacent (420), et
- une unité de contrôle (510) conçue pour convertir un premier télégramme de données reçu par l'intermédiaire de la première interface (520) sous la forme d'un télégramme Ethernet (800) en un deuxième télégramme de données (900) et pour envoyer le deuxième télégramme de données par l'intermédiaire de la deuxième interface, les données provenant de la zone de données du premier télégramme de données étant prises en compte de manière inchangée dans le deuxième télégramme de données et certaines données contenues dans le premier télégramme de données n'étant pas prises en compte.

10. Abonné de bus selon la revendication 9, le moment de démarrage d'envoi et/ou de lecture étant déterminé par un identifiant (750, 760) à l'intérieur du deuxième télégramme de données ou par la fin du deuxième télégramme de données.

11. Système de commande (10) pour la commande en temps réel d'un système d'automatisation, conçu pour la mise en oeuvre d'un procédé selon l'une des revendications 1 à 7, comprenant :
- un réseau (410) conçu pour la transmission de télégrammes Ethernet,
- un système de bus sous-jacent (420) sous le réseau (410), le système de bus sous-jacent (420) étant conçu comme un système de bus annulaire,
- un coupleur de bus (500) selon la revendication 8, qui est relié avec le réseau (410) et le système de bus sous-jacent (420), et
- au moins un abonné de bus (610, 620, 630) connecté au système de bus sous-jacent (420) selon l'une des revendications 9 ou 10.
